# EUROPÄISCHE PATENTSCHRIFT

(11) **EP 0 861 376 B1**
(45) Veröffentlichungstag und Bekanntmachung des Hinweises auf die Patenterteilung: **11.09.2002**
(21) Anmeldenummer: 97931615.5
(22) Anmeldetag: 03.06.1997
(51) Int. Cl.: F04B 53/14

(54) **KOLBENPUMPE**
PISTON PUMP
POMPE A PISTON

(30) Priorität: 19.09.1996 DE 19638200; 22.03.1997 DE 19712147
(43) Veröffentlichungstag der Anmeldung: 02.09.1998
(73) Patentinhaber: ROBERT BOSCH GMBH, 70442 Stuttgart (DE)
(72) Erfinder: SCHULLER, Wolfgang, D-74343 Sachsenheim (DE); ALAZE, Norbert, D-71706 Markgröningen (DE)
(86) Internationale Anmeldenummer: DE9701101
(87) Internationale Veröffentlichungsnummer: WO98012434

(56) Entgegenhaltungen:
- CH-A- 358 685
- CH-A- 359 977
- DE-A- 2 222 285
- DE-A- 4 133 391
- DE-A- 4 407 978
- US-A- 1 497 558
- US-A- 3 549 155
- BEITZ W. & KÜTTNER K.-H: 'Dubbel - Taschenbuch für den Maschinenbau', 1990, SPRINGER-VERLAG, BERLIN siehe Seite P18 - Seite P19

## Beschreibung

### Stand der Technik

Die Erfindung geht aus von einer Kolbenpumpe zum Fördern von Hydraulikflüssigkeit, insbesondere für Fahrzeugbremsanlagen, der im Oberbegriff des Anspruchs 1 definierten Gattung.

Bei einer bekannten Kolbenpumpe dieser Art (DE 44 07 978 A1) ist der Stufenkolben als einstückiges Drehteil hergestellt, in dem mehrere Ringnuten zur Realisierung von Pumpenkammern und zur Aufnahme von Dichtungen eingestochen sind. Ein solcher Pumpenkolben ist wegen des nicht unerheblichen Bearbeitungsaufwands sehr kostenintensiv. Der Stufenkolben hat einen Bereich mit einem größeren Druchmesser und einen Bereich mit einem kleineren Durchmesser. Um einen deutlich merkbaren Unterschied zwischen diesen beiden Durchmessern zu erhalten, muß am Stufenkolben viel Werkstoff abgetragen werden, was einen erheblichen Arbeitsaufwand erfordert. Der Stufenkolben ist auch im Bereich seines kleineren Durchmessers axial verschiebbar gelagert. Wegen dieser Lagerung muß der Stufenkolben auch in diesem Bereich eine gute Form- und Oberflächengüte aufweisen. Weil der Durchmesser des Stufenkolbens bei dieser Lagerstelle reduziert ist, kann die geforderte Form- und Oberflächengüte nur mit erhöhtem Arbeitsaufwand erreicht werden.

Bei einer ebenfalls bekannten Kolbenpumpe dieser Art (FR 1 218 349 A1) ist der Stufenkolben zweiteilig ausgebildet und besteht aus einem Kolbenzylinder, der im durchmessergrößeren Bohrungsabschnitt einer Stufenbohrung geführt ist und mit seinen voneinander abgekehrten Stirnflächen jeweils eine Pumpenkammer begrenzt, und einer in dem durchmesserkleineren Bohrungsabschnitt geführten Kolbenstange, die durch die eine Pumpenkammer hindurchgeführt ist und mit einem endseitigen Kragen formschlüssig in eine in der Stirnfläche des Kolbenzylinders eingearbeitete Aussparung eingreift. Eine solche Zweiteiligkeit erfordert ebenfalls hohe Fertigungskosten, zumal Kolbenzylinder und Kolbenstange separate Führungen für ihre Axialbewegung benötigen. Weil der Kolbenzylinder und die Kolbenstange jeweils für sich separat geführt sind, bedeutet dies, wegen erforderlicher Mindest-Führungslängen, eine insgesamt große Baulänge.

Der Dubbel - Taschenbuch für den Maschinenbau; 17. neubearbeitete Auflage; Herausgegeben von W. Beitz und K.-H. Küttner; Springer-Verlag Berlin (1990); Seiten P18 bis P19 zeigt Manschettenkolben mit an dem Manschettenkolben angebrachten Dichtungsmanschetten.

### Vorteile der Erfindung

Die erfindungsgemäße Kolbenpumpe mit den kennzeichnenden Merkmalen des Anspruchs 1 hat demgegenüber den Vorteil, daß der Stufenkolben sehr kostengünstig herstellbar ist und einen deutlichen Kostenvorsprung gegenüber einem einstückigen Drehteil oder einem in Kolbenstange und Kolbenzylinder zweigeteilten Stufenkolben hat. Damit ist für die erfindungsgemäße Kolbenpumpe mit dem durch die Stufigkeit des Pumpenkolbens bedingten Vorteil der höheren Förderleistung auch bei tiefen Temperaturen auch der Markt der preisgünstigeren Bremsanlagen für Fahrzeuge der unteren Preisklasse zugänglich und kann hier deren Bremsleistung verbessern helfen.

Durch die in den weiteren Ansprüchen aufgeführten Maßnahmen sind vorteilhafte Weiterbildungen und Verbesserungen der im Anspruch 1 angegebenen Kolbenpumpe möglich.

### Zeichnung

Die Erfindung ist anhand von in der Zeichnung dargestellten Ausführungsbeispielen in der nachfolgenden Beschreibung näher erläutert. Es zeigen:
- Fig. 1: ausschnittweise einen Längsschnitt einer Kolbenpumpe für eine Fahrzeugbremsanlage,
- Fig. 2: eine vergrößerte Darstellung des Ausschnits II in Fig. 1 bei einer modifizierten Kolbenpumpe,
- Fig. 3a und 3b: jeweils einen Längsschnitt der auf den Vollzylinder aufgepreßten Buchse zur Darstellung des Stufenkolbens der Kolbenpumpe in Fig. 2 gemäß zweier Ausführungsbeispiele.

### Beschreibung der Ausführungsbeispiele

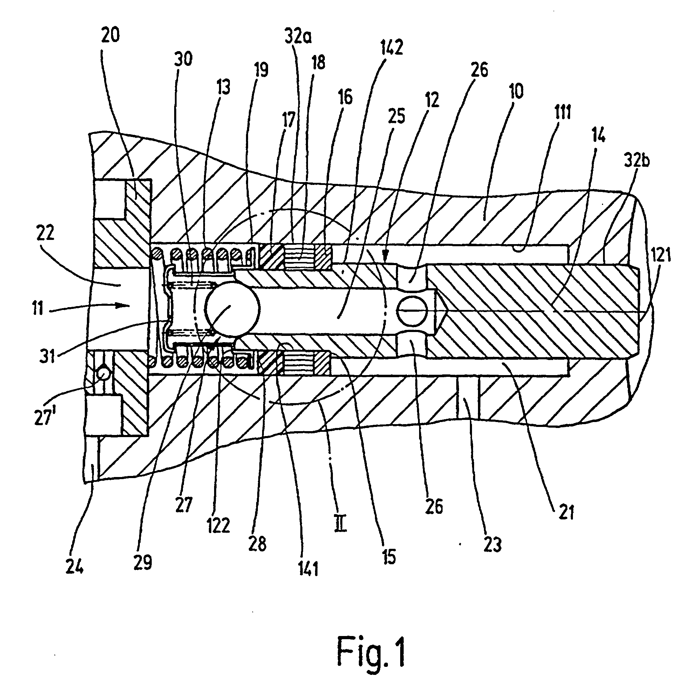

Die in Fig. 1 ausschnittweise im Längsschnitt dargestellte Kolbenpumpe zum Fördern von Hydraulikflüssigkeit ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzs. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren der Radbremszylinder aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt, oder bei der die Pumpe zum Füllen eines Speichers der Bremsanlage dient.

Die Kolbenpumpe weist einen Pumpenkörper 10 auf, in dem ein zylinderförmiger Pumpenraum 11 ausgebildet ist. Im Pumpenraum 11 ist ein Stufenkolben 12 axial verschieblich geführt, der von einem hier nicht dargestellten Antriebsglied, das an der in Fig. 1 rechten Stirnfläche 121 des Stufenkolbens 12 angreift, gegen die Rückstellkraft einer Pumpenfeder 13 in eine hin- und hergehende Hubbewegung angetrieben wird. Wie in der DE 44 07 978 A1 beschrieben, kann das Antriebsglied ein umlaufender Exzenter sein, an dessen Außenumfang die Stirnfläche 121 des Stufenkolbens 12 durch die Pumpenfeder 13 angedrückt wird.

Aus Gründen einer kostengünstigen Fertigung besteht der Stufenkolben 12 aus einem Vollzylinder 14 und einer auf dem Zylinder 14 festgehaltenen Stützscheibe oder Buchse 16. Der Vollzylinder 14 ist in seinem in Fig. 1 linken Teil etwas abgedreht, wodurch ein durchmesserkleinerer Zylinderabschnitt 141 und ein durchmessergrößerer Zylinderabschnitt 142 vorhanden sind, an deren Übergang eine radial verlaufende Schulter 15 ausgebildet ist. Der Durchmesser des zylinderkleineren Zylinderabschnitts 141 ist nur wenig kleiner als der Durchmesser des durchmessergrößeren Zylinderabschnitts 142, so daß wenig Materialabtrag bzw. Materialumformung erforderlich ist, um die Schulter 15 am Vollzylinder 14 zu erhalten. Die Buchse 16 ist auf den durchmesserkleineren Zylinderabschnitt 141 aufgepreßt und stützt sich an der Schulter 15 ab. Eine ebenfalls auf den Zylinderabschnitt 141 aufgeschobene Elastomerdichtung 17 dichtet den Stufenkolben 12 gegenüber der Zylinderwand 111 des Pumpenraums 11 ab. Zwischen der Buchse 16 und der Elastomerdichtung 17 ist ein Gleitring 18 aus Polytetrafluoretylen (PTFE) angeordnet. Der Gleitring 18 ist ebenfalls mit leichter Pressung auf den durchmesserkleineren Zylinderabschnitt 141 aufgeschoben. Er sorgt für eine erste Führung 32a des Sutfenkolbens 12 im Bereich der Stirnfläche 122 in der Zylinderwand 111 des Pumpenkörpers 10.

Die Zylinderwand 111 des Pumpenkörpers 10 ist abgestuft ausgeführt und hat im Bereich der einen Stirnfläche 121 des Stufenkolbens 12 einen kleineren Durchmesser als im Bereich der anderen Stirnfläche 122 des Stufenkolbens 12. Dadurch entsteht im Bereich der Stirnfläche 121 eine den Stufenkolben 12 führende zweite Führung 32b. Im Bereich der Stirnfläche 122 wird der Stufenkolben 12 am Außendurchmesser des Gleitrings 18 geführt. Dadurch entsteht die gewünschte Abstufung der Wirkfläche des Stufenkolbens 12 und damit die durch die Stufigkeit des Stufenkolbens 12 bedingten Vorteile, insbesondere auch bei tiefen Temperaturen. Zwecks Abdichtung zwischen dem Pumpenkörper 10 und dem Vollzylinder 14 kann im Bereich der zweiten Führung 32b im Pumpenkörper 10 eine nicht dargestellte umlaufende Nut mit eingelegtem Dichtring vorgesehen sein. Weil die Buchse 16 erst nach der Oberflächenbearbeitung des Zylinders 14 angebaut wird, hat der Zylinder 14 im Bereich der zweiten Führung 32b seinen größten Durchmesser, was eine einfache Bearbeitbarkeit des Zylinders 14 ergibt. Deshalb kann ohne großen Arbeitsaufwand der Zylinder 14 im Bereich der Führung 32b mit einer guten Maß-, Form- und Oberflächengüte versehen werden, was eine gute Führung 32b ergibt und die Dauerhaltbarkeit der im Bereich der Führung 32b vorgesehenen Dichtung günstig beeinflußt.

Die als Schraubendruckfeder ausgebildete Pumpenfeder 13 stützt sich einerseits an einem in den Pumpenraum 11 eingesetzten Widerlager 20 und andererseits an einem an der linken Stirnfläche 122 des Stufenkolbens 12 bzw. des Vollzylinders 14 anliegenden Federteller 19 ab, der in axialem Abstand von der Elastomerdichtung 17 und so verläuft, daß die Elastomerdichtung 17 axial nicht vorgespannt ist.

Der Stufenkolben 12 unterteilt den Pumpenraum 11 in zwei voneinander getrennte Pumpenkammern 21,22. Die Pumpenkammer 21 steht über einen Ansaugkanal 23 mit einem Pumpeneinlaß und die Pumpenkammer 22 über einen Druckkanal 24 mit einem Pumpenauslaß in Verbindung. Die Pumpenkammer 21 erhält nachfolgend die Bezeichnung Niederdruckkammer 21, und die Pumpenkammer 22 wird nachfolgend als Hochdruckkammer 22 bezeichnet. In den Stufenkolben 12 ist einerseits von der Stirnfläche 122 her eine zentrale Sackbohrung 25 und sind andererseits quer zur Sackbohrung 25 mehrere Radialbohrungen 26 eingebracht, die in der Sackbohrung 25 münden. Über die Sackbohrung 25 und die Radialbohrungen 26 besteht eine Verbindung zwischen der Pumpenkammer 21 und der Pumpenkammer 22, die mittels eines ersten Rückschlagventils 27 verschließbar ist. Zur Realisierung des Rückschlagventils 27 ist in die Stirnfläche 122 des Stufenkolbens 12 ein die Sackbohrung 25 umgebender Ventilsitz 28 eingearbeitet, auf den eine Ventilkugel 29 von einer Ventilschließfeder 30 aufgepreßt ist. Die ebenfalls als Schraubendruckfeder ausgebildete Ventilschließfeder 30 stützt sich dabei einerseits an der Ventilkugel 29 und andererseits an einem Federhalter 31 ab, der an dem Federteller 19 für die Pumpenfeder 13 befestigt ist. Die Ventilschließfeder 30 ist wesentlich schwächer als die Pumpenfeder 13.

Zwischen der Hochdruckkammer 22 und dem Druckkanal 24 gibt es ein in der Zeichnung der besseren Übersichtlichkeit wegen nur symbolhaft dargestelltes zweites Rückschlagventil 27'. Das erste Rückschlagventil 27 arbeitet als Einlaßventil, und das zweite Rückschlagventil 27' arbeitet als Auslaßventil.

In der in der Fig. 1 dargestellten Stellung des Stufenkolbens 12 hat dieser seine eine Hubendstellung erreicht, in der er am weitesten in Fig. 1 nach links verschoben ist und dabei Hydraulikflüssigkeit aus der Pumpenkammer 22 über das zweite Rückschlagventil 27' und über den Druckkanal 24 zum Pumpenausgang gefördert hat. Bei der nun unter der Wirkung der Pumpenfeder 13 einsetzenden Rückbewegung des Stufenkolbens 12 (in Fig. 1 nach rechts) öffnet das Rückschlagventil 27, und Hydraulikflüssigkeit strömt aus der Pumpenkammer 21 über die Bohrungen 25,26 in die Pumpenkammer 22. Bewegt sich der Stufenkolben 12 wieder in Fig. 1 nach links, so wird bei geschlossenem Rückschlagventil 27 Hydraulikflüssigkeit aus der Pumpenkammer 22 über den Druckkanal 24 zum Pumpenauslaß gefördert, wobei wegen der Differenz der Durchmesser der beiden Führungen 32a und 32b gleichzeitig über den Ansaugkanal 23 Hydraulikflüssigkeit in die Pumpenkammer 21 nachströmt.

Die beispielhaft dargestellte Verbindung von der Pumpenkammer 21 zur Pumpenkammer 22 kann auch anders ausgeführt sein. Beispielsweise kann diese Verbindung auch durch den Pumpenkörper 10 verlaufen. Das Rückschlagventil 27, das eine Strömung aus der Pumpenkammer 21 zur Pumpenkammer 22 gestattet, aber die umgekehrte Strömungsrichtung sperrt, kann auch durch beispielsweise eine Kantensteuerung ersetzt werden.

Für den Preßsitz der Buchse 16 auf dem durchmesserkleineren Zylinderabschnitt 141 des Vollzylinders 14 ist eine genaue Passung erforderlich. Dazu ist bei dem in der Fig. 1 dargestellten Ausführungsbeispiel eine ausreichende Maß-, Form- und Oberflächengüte des durchmesserkleineren Zylinderabschnitts 141 erforderlich. Soll bei einem zylindrischen Körper ein im Durchmesser reduzierter Bereich mit einer besonderen Maß-, Form- und Oberflächengüte versehen werden, so bedeutet dies einen erhöhten Arbeitsaufwand, der höher ist als wenn der zylindrische Körper mit den gleichen Eigenschaften nur im Bereich seines größten Durchmessers bearbeitet werden müßte.

Um die Buchse 16 ohne eine Beschädigung auf den Stufenkolben 12 aufschieben zu können, ist es bei der in der Fig. 1 dargestellten Ausführungsvariante ratsam, am Übergang zwischen der linken Stirnfläche 122 und dem durchmesserkleineren Zylinderabschnitt 141 eine Fase vorzusehen. Das Herstellen dieser Fase ist zwar nicht besonders aufwendig, spielt jedoch, weil die Pumpe in großer Stückzahl hergestellt wird, insgesamt eine merkbare Rolle.

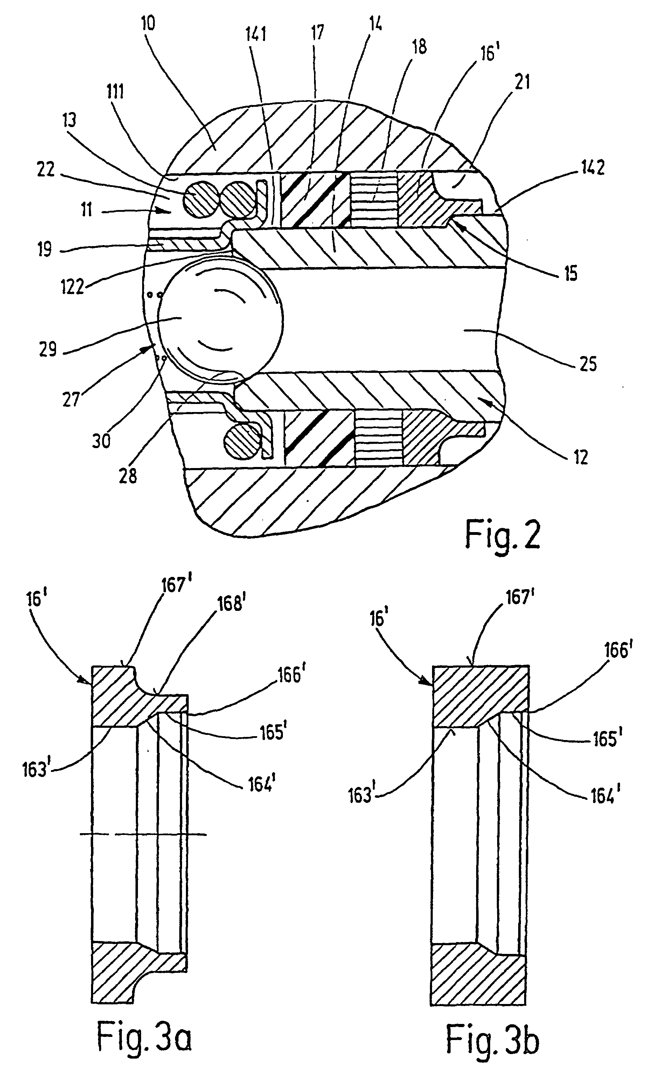

Um diese Schwierigkeiten bei der Herstellung zu umgehen und den Fertigungsaufwand für den Vollzylinder 14 zu senken, ist in dem in Fig. 2 ausschnittweise dargestellten modifizierten Ausführungsbeispiel der Kolbenpumpe die Buchse 16' mit einer, in axialer Richtung betrachtet, abgestuft ausgeführten Innenbohrung versehen. Der Außendurchmesser des durchmessergrößeren Zylinderabschnitts 142 ist extrem toleranzgenau, da er durchgangsgeschliffen werden kann, so daß sich ein guter, zuverlässiger Preßsitz der Buchse 16' ergibt. Die Herstellung des durchmessergrößeren Zylinderabschnitts 142 mit hochwertiger Maß-, Form- und Oberflächengüte ist, weil durchgangsgeschliffen werden kann, relativ einfach. Um den durchmesserkleineren Zylinderabschnitt 141 mit gleichen Qualitäten herzustellen, wäre der Aufwand größer. Im übrigen stimmt die in Fig. 2 ausschnittweise dargestellte Kolbenpumpe mit der in Fig. 1 dargestellten und beschriebenen Kolbenpumpe überein, so daß gleiche Bauteile mit gleichen Bezugszeichen versehen sind und die Beschreibung der Fig. 1 insoweit auch für Fig. 2 gilt.

Zur Verdeutlichung der Ausbildung der Buchse 16' ist diese im Längsschnitt noch einmal in Fig. 3a dargestellt. Eine leicht abgewandelte ausgeführte Buchse 16' zeigt die Fig. 3b. Bei beiden, in den Fig. 3a und 3b dargestellten Varianten ist der Innendurchmeser der Buchse 16' abgestuft ausgeführt. Die Buchse 16' hat einen durchmesserkleineren Buchsenabschnitt 163', einen durchmessergrößeren Buchsenabschnitt 165', am Übergang zwischen den beiden Buchsenabschnitten 163' und 165' eine Schulter 164', eine Fase 166' und einen Außendurchmesser 167'.

Der Durchmesser des durchmesserkleineren Buchsenabschnitts 163' ist mit relativ großem Spiel auf den durchmesserkleineren Zylinderabschnitt 141 so abgestimmt, daß die Buschse 16' leicht und ohne Widerstand auf den Zylinder 14 aufgeschoben werden kann, bis der durchmessergrößere Buchsenabschnitt 165' den durchmessergrößeren Zylinderabschnitt 142 erreicht. In Axialrichtung betrachtet, kann der durchmesserkleinere Buchsenabschnitt 163' ziemlich kurz sein. Die Neigung der konisch verlaufenden Schulter 164' und die Neigung der konisch ausgeführten Schulter 15 des Vollzylinders 14 sind aufeinander abgestimmt, wobei auch eine Winkeldifferenz nicht schaden würde. Weil die Schulter 164' konisch geneigt ist, wird das Aufschieben der Buchse 16' auf den Vollzylinder 14 über die Kante am Übergang zwischen der linken Stirnfläche 122 und dem durchmesserkleineren Zylinderabschnitt 141 wesentlich erleichtert, ohne daß dazu diese Kante am Vollzylinder 14 mit einer Fase versehen werden muß.

Der Durchmesser des durchmessergrößeren Buchsenabschnitts 165' und der Durchmesser des durchmessergrößeren Zylinderabschnitts 142 sind so aufeinander abgestimmt, daß nach dem vollständigen Aufstecken der Buchse 16' auf den Vollzylinder 14 der durchmessergrößere Buchsenabschnitt 165' mit Pressung auf dem durchmessergrößeren Zylinderabschnitt 142 gehalten wird. Weil es leicht möglich ist, den durchmessergrößeren Zylinderabschnitt 142 und den durchmessergrößeren Buchsenabschnitt 165' mit hoher Präzision herzustellen, ergibt sich ohne großen Aufwand eine präzise Ausrichtung der Buchse 16' auf dem Vollzylinder 14.

Der Außendurchmesser 167' der Buchse 16' ist auf den Durchmesser der Zylinderwand 111 so abgestimmt, daß ein möglichst kleiner Spalt zwischen diesen beiden Durchmessern vorhanden ist, um ein Eindringen des Gleitrings 18 in den Spalt zwischen der Zylinderwand 111 und dem Außendurchmesser 167' zu verhindern, und andererseits soll dieser Spalt groß genug sein, um zu verhindern, daß die Buchse 16' an der Zylinderwand 111 streift. Weil die Buchse 16' mit hoher Präzision auf dem Vollzylinder 14 gehalten wird, ist es möglich, den Spalt zwischen dem Außendurchmeser 167' und der Zylinderwand 111 ziemlich klein auszuführen.

Um das Aufschieben des durchmessergrößeren Buchsenabschnitts 165' auf den durchmessergrößeren Zylinderabschnitt 142 zu erleichtern, ist am vorderen Ende des durchmessergrößeren Buchsenabschnitts 165' die Fase 166' vorgesehen.

Durch Verwendung eines entsprechend geformten Werkzeugs kann der die Buchsenabschnitte 163',165', die Schulter 164' und die Fase 166' umfassende Innendurchmesser der Buchse 16' ohne großen Aufwand mit hoher Präzision in einem Arbeitsgang hergestellt werden. Wegen der Führung 32b muß der durchmessergrößere Zylinderabschnitt 142 mit hoher Päzision ausgeführt sein. Dadurch, daß bei dem in der Fig. 2 dargestellten Ausführungsbeispiel die Buchse 16' in radialer Richtung auf dem wegen der Führung 32b mit hoher Präzision hergestellten durchmessergrößeren Zylinderabschnitt 142 gelagert ist, ist für das Festhalten der Buchse 16' in radialer Richtung keine extra Bearbeitung des Zylinders 14 erforderlich.

Die beiden in den Fig. 3a und 3b dargestellten Ausführungsvarianten der Buchse 16' unterscheiden sich dadurch, daß bei dem in der Fig. 3a gezeigten Ausführungsbeispiel am Außendurchmesser 167', auf der dem Gleitring 18 abgewandten Seite, eine Eindrehung 168' vorgesehen ist. Zwischen dem Gleitring 16' und der Führung 32b (Fig. 1) können verschiedene, nicht dargestellte Einbauten, beispielsweise ein Filtersieb, vorhanden sein. Um eine insgesamt möglichst kleine Baugröße zu erreichen, ist die Eindrehung 168' vorgesehen, um Raum für die Einbauten zu schaffen.

Die Buchse 16 bzw. 16' wird auf dem Zylinder 14 des Stufenkolbens 12 festgehalten. In radialer Richtung betrachtet, wird die Buchse 16,16' auf dem durchmesserkleineren Zylinderabschnitt 141 (Fig. 1) bzw. auf dem durchmessergrößeren Zylinderabschnitt 142 (Fig. 2) festgehalten. In axialer Richtung betrachtet, wird die Buchse 16 bzw. 16' an der der Hochdruckkammer 22 zugewandten Schulter 15 festgehalten. Wenn der Stufenkolben 12 während eines Einfachhubs die Hydraulikflüssigkeit in Richtung des Druckkanals 24 schiebt, ist der Druck in der Hochdruckkammer 22 wesentlich größer als der Druck in der Niederdruckkammer 21. Die Druckdifferenz zwischen diesen beiden Drücken beaufschlagt die Buchse 16,6' gegen die Schulter 15. Es kann sein, daß während eines Einfachhubs der Druck in der Niederdruckkammer 21 null ist, während der Druck in der Hochdruckkammer 22 einen hohen Wert erreicht. Durch die der Hochdruckkammer 22 zugewandte Schulter 15 am Zylinder 14 ist es kein Problem, die auf die Buchse 16,16' wirkende Kraft aufzufangen. Dabei spielt es keine Rolle, ob die Schulter 15 radial verläuft (Fig. 1) oder konisch geneigt ist (Fig. 2).

Die Dichtung 17, die vorzugsweise aus einem Elastomerwerkstoff besteht, dichtet die Hochdruckkammer 22 gegen die Niederdruckkammer 21. Die Dichtung 17 wird von der Buchse 16,16' in axialer Richtung gehalten. Die Dichtung 17 erstreckt sich über die gesamte Höhe des Ringraums zwischen der Zylinderwand 111 und dem durchmesserkleineren Zylinderabschnitt 141. Dadurch kann die Dichtung 17 dafür sorgen, daß keine Hydraulikflüssigkeit aus der Hochdruckkammer 22 durch den Spalt zwischen dem Außendurchmesser der Buchse 16,16' und der Zylinderwand 111 und auch nicht zwischen dem Innendurchmesser der Buchse 16,16' und dem Zylinder 14 in die Niederdruckkammer 21 gelangen kann. Es sei noch erwähnt, daß es auch möglich ist, Buchse 16,16' mit je einer separaten Dichtung an ihrem Außendurchmesser und an ihrem Innendurchmesser abzudichten, was jedoch den Einsatz mehrerer Dichtungen erfordern würde. Die in der Zeichnung dargestellten Ausführungsbeispiele haben den Vorteil, daß mit der einen Dichtung 17 die Abdichtung der Hochdruckkammer 22 gegen die Niederdruckkammer 21 möglich ist.

## Patentansprüche

1. Kolbenpumpe zum Fördern von Hydraulikflüssigkeit, insbesondere für Fahrzeugbremsanlagen, mit einem in einem Pumpenraum axial verschieblichen Stufenkolben, der mit einem Kolbenabschnitt den Pumpenraum in eine Niederdruckkammer (21) und in eine Hochdruckkammer (22) mit variablem Kammervolumen unterteilt, **dadurch gekennzeichnet, daß** der Stufenkolben (12) einen Zylinder (14) mit einer der Hochdruckkammer (22) zugewandten Schulter (15) und eine auf dem Zylinder (14) festgehaltene, vom in der Hochdruckkammer (22) herrschenden Druck gegen die Schulter (15) beaufschlagte Buchse (16, 16') aufweist, wobei die Buchse (16, 16') einen den Stufenkolben (12) in dem Pumpenraum (11) führenden Gleitring (18) hält.

2. Kolbenpumpe nach Anspruch 1, **dadurch gekennzeichnet, daß** die Buchse (16, 16') eine die Hochdruckkammer (22) gegen die Niederdruckkammer (21) dichtende Dichtung (17) hält.

3. Kolbenpumpe nach Anspruch 1 oder 2, **dadurch gekennzeichnet, daß** die Buchse (16, 16') kraftschlüssig auf den Zylinder (14) aufgepreßt ist.

4. Kolbenpumpe nach einem der Ansprüche 1 bis 3, **dadurch gekennzeichnet, daß** die Buchse (16, 16') mit ihrer von dem Gleitring (18) abgekehrten Stirnfläche an der am Umfang des Zylinders (14) umlaufenden Schulter (15) anliegt.

5. Kolbenpumpe nach einem der Ansprüche 1 bis 4, **dadurch gekennzeichnet, daß** der Gleitring (18) inzwischen der Buchse (16) und der Elastomerdichtung (17) angeordnet ist und aus Kunststoff, vorzugsweise Polytetrafluorethylen (PTFE), besteht.

6. Kolbenpumpe nach einem der Ansprüche 1 bis 5, **dadurch gekennzeichnet, daß** eine als Schraubendruckfeder ausgebildete Kolbenrückstellfeder (13) sich einerseits an einem Widerlager (20) im Pumpenraum (11) und andererseits am Stufenkolben (12) abstützt.

7. Kolbenpumpe nach einer der Ansprüche 1 bis 6, **gekennzeichnet durch** eine mittels eines Steuerglieds verschließbare Verbindung zwischen den beiden Pumpenkammern (21, 22).

8. Kolbenpumpe nach Anspruch 7, **dadurch gekennzeichnet, daß** die Verbindung zwischen den beiden Pumpenkammern (21, 22) als Bohrungen (25, 26) im Stufenkolben (12) und das Steuerglied als Rückschlagventil (27) ausgeführt ist.

9. Kolbenpumpe nach einem der Ansprüche 1 bis 8, **dadurch gekennzeichnet, daß** der von der Buchse (16, 16') begrenzte Zylinderabschnitt (141) des Zylinders (14) einen gegenüber dem Zylinderdurchmesser reduzierten Außendurchmesser aufweist und daß die Schulter (15) den Übergang der Außenflächen des durchmesserkleineren Zylinderabschnitts (141) und des durchmessergrößeren Zylinderabschnitts (142) bildet.

10. Kolbenpumpe nach Anspruch 9, **dadurch gekennzeichnet, daß** die Buchse (16) auf dem durchmesserkleineren Zylinderabschnitt (141) sitzt und der Kraftschluß zwischen der Innenfläche der Buchse (16) und der Außenfläche des durchmesserkleineren Zylinderabschnitts (141) hergestellt ist.

11. Kolbenpumpe nach Anspruch 9, **dadurch gekennzeichnet, daß** die Buchse (16') durch die Stufung ihres Innendurchmessers einen Buchsenabschnitt (163') mit einem kleineren Innendurchmesser und einen Buchsenabschnitt (165') mit einem größeren Innendurchmesser aufweist und daß die Buchse (16') mit ihrem den kleineren Innendurchmesser aufweisenden Buchsenabschnitt (163') mit relativ großem Spiel auf dem durchmesserkleineren Zylinderabschnitt (141) sitzt und der Kraftschluß zwischen der ringförmigen Innenfläche des den größeren Innendurchmesser aufweisenden Buchsenabschnitts (165') und der Außenfläche des durchmessergrößeren Zylinderabschnitts (142) hergestellt ist.

12. Kolbenpumpe nach Anspruch 11, **dadurch gekennzeichnet, daß** zur vereinfachten Montage der Buchse (16') die zwischen den beiden Buchsenabschnitten (163', 165') sich ausbildende Schulter (164') konisch geneigt ist.

13. Kolbenpumpe nach Anspruch 11 oder 12, **dadurch gekennzeichnet, daß** der durchmessergrößere Zylinderabschnitt (142) durchmessergenau spitzenlos geschliffen ist.

## Claims

1. Piston pump for the conveyance of hydraulic fluid, in particular for vehicle brake systems, with a step piston which is axially displaceable in a pump space and which with a piston portion subdivides the pump space into a low-pressure chamber (21) and into a high-pressure chamber (22) with a variable chamber volume, **characterized in that** the step piston (12) has a cylinder (14) with a shoulder (15) facing the high-pressure chamber (22) and has a bush (16, 16') which is retained on the cylinder (14) and is loaded against the shoulder (15) by the pressure prevailing in the high-pressure chamber (22), the bush (16, 16') holding a sliding ring (18) guiding the step piston (12) in the pump space (11).

2. Piston pump according to Claim 1, **characterized in that** the bush (16, 16') holds a seal (17) sealing the high-pressure chamber (22) relative to the low-pressure chamber (21).

3. Piston pump according to Claim 1 or 2, **characterized in that** the bush (16, 16') is pressed non-positively onto the cylinder (14).

4. Piston pump according to one of Claims 1 to 3, **characterized in that** the bush (16, 16') comes to bear, with its end face facing away from the sliding ring (18), on the shoulder (15) running round on the circumference of the cylinder (14).

5. Piston pump according to one of Claims 1 to 4, **characterized in that** the sliding ring (18) is arranged between the bush (16) and the elastomeric seal (17) and consists of plastic, preferably polytetrafluor ethylene (PTFE).

6. Piston pump according to one of Claims 1 to 5, **characterized in that** a piston return spring (13) designed as a helical compression spring is supported, on the one hand, on an abutment (20) in the pump space (11) and, on the other hand, on the step piston (12).

7. Piston pump according to one of Claims 1 to 6, **characterized by** a connection between the two pump chambers (21, 22) which is capable of being closed by means of a control member.

8. Piston pump according to Claim 7, **characterized in that** the connection between the two pump chambers (21, 22) is designed as bores (25, 26) in the step piston (12) and the control member is designed as a non-return valve (27).

9. Piston pump according to one of Claims 1 to 8, **characterized in that** that cylinder portion (141) of the cylinder (14) which is delimited by the bush (16, 16') has an outside diameter reduced in relation to the cylinder diameter, and **in that** the shoulder (15) forms the transition of the outer surfaces of the cylinder portion (141) of smaller diameter and of the cylinder portion (142) of larger diameter.

10. Piston pump according to Claim 9, **characterized in that** the bush (16) sits on the cylinder portion (141) of smaller diameter, and the non-positive connection is made between the inner surface of the bush (16) and the outer surface of the cylinder portion (141) of smaller diameter.

11. Piston pump according to Claim 9, **characterized in that** the bush (16') has, by virtue of the stepping of its inside diameter, a bush portion (163') with a smaller inside diameter and a bush portion (165') with a larger inside diameter, and **in that** the bush (16') sits with its bush portion (163') having the smaller inside diameter, with relatively large play, on the cylinder portion (141) of smaller diameter, and the non-positive connection is made between the annular inner surface of the bush portion (165') having the larger inside diameter and the outer surface of the cylinder portion (142) of larger diameter.

12. Piston pump according to Claim 11, **characterized in that**, for the simplified mounting of the bush (16'), the shoulder (164') formed between the two bush portions (163', 165') is inclined conically.

13. Piston pump according to Claim 11 or 12, **characterized in that** the cylinder portion (142) of larger diameter is ground, centreless, exactly to diameter.

## Revendications

1. Pompe à piston pour débiter du liquide hydraulique notamment dans des installations de freinage de véhicule comprenant un piston étagé coulissant axialement dans une chambre de pompe, ce piston subdivisant par une partie, la chambre de pompe en une chambre basse pression (21) et une chambre haute pression (22) de volume variable,
**caractérisée en ce que**
le piston étagé (12) comporte un cylindre (14) avec un épaulement (15) tourné vers la chambre haute pression (22) et une douille (16, 16') tenue sur le cylindre (14), contre l'épaulement (15) par la pression régnante dans la chambre à haute pression (22),
la douille (16, 16') tenant une bague de glissement (18) pour guider le piston étagé (12) dans la chambre de piston (11).

2. Pompe à piston selon la revendication 1,
**caractérisée en ce que**
la douille (16, 16') porte un joint (17) qui assure l'étanchéité de la chambre haute pression (22) par rapport à la chambre basse pression (21).

3. Pompe à piston selon les revendications 1 ou 2,
**caractérisée en ce que**
la douille (16, 16') est pressée sur le cylindre (14) par une liaison par la force.

4. Pompe à piston selon l'une des revendications 1 à 3,
**caractérisée en ce que**
la douille (16, 16') s'applique par sa surface frontale à l'opposé de celle de l'anneau de glissement (18) contre l'épaulement (15) périphérique du cylindre (14).

5. Pompe à piston selon l'une des revendications 1 à 4,
**caractérisée en ce que**
l'anneau de glissement (18) est installé entre la douille (16) et le joint en élastomère (17) et cet anneau est en matière plastique notamment en polytétrafluoréthylène (PTFE).

6. Pompe à piston selon l'une des revendications 1 à 5,
**caractérisée par**
un ressort de rappel de piston (13) en forme de ressort hélicoïdal s'appuyant d'un côté contre un appui (20) dans la chambre de pompe (11) et de l'autre côté contre le piston étagé (12).

7. Pompe à piston selon l'une des revendications 1 à 6,
**caractérisée par**
une liaison entre les deux chambres de pompe (21, 22) qui peut être fermée par un organe de commande.

8. Pompe à piston selon la revendication 7,
**caractérisée en ce que**
la liaison entre les deux chambres de pompe (21, 22) est réalisée sous la forme de perçages (25, 26) dans le piston étagé (12) et l'organe de commande est un clapet anti-retour (27).

9. Pompe à piston selon l'une des revendications 1 à 8,
**caractérisée en ce que**
le segment (141) du cylindre (14) délimité par la douille (16, 16') a un diamètre extérieur réduit par rapport au diamètre du cylindre et l'épaulement (15) forme le passage entre la surface extérieure du segment de cylindre (141) de diamètre réduit et du segment de cylindre (142) de diamètre augmenté.

10. Pompe à piston selon la revendication 9,
**caractérisée en ce que**
la douille (16) repose sur le segment de cylindre (141) de diamètre réduit et la force passe entre la surface intérieure de la douille (16) et la surface extérieure du segment de cylindre de diamètre réduit (141).

11. Pompe à piston selon la revendication 9,
**caractérisée en ce que**
- la douille (16'), par la forme étagée de son diamètre intérieur présente un segment de douille (163') de diamètre intérieur réduit et un segment (165') de diamètre intérieur augmenté et
- la douille (16') s'appuie par son segment (163') de diamètre intérieur réduit avec du jeu relativement important sur le segment de cylindre de diamètre réduit (141), et la force est transmise entre la surface intérieure annulaire du segment (165') de diamètre intérieur augmenté et la surface d'appui du segment de cylindre (142) de diamètre plus grand.

12. Pompe à piston selon la revendication 11,
**caractérisée en ce que**
pour simplifier le montage de la douille (16'), l'épaulement (164') entre les deux segments de douille (163', 165') est conique.

13. Pompe à piston selon les revendications 11 ou 12,
**caractérisés en ce que**
le segment de cylindre (142) de diamètre augmenté est meulé de manière précise au diamètre, sans aspérité.
